# EUROPÄISCHE PATENTSCHRIFT

(11) **EP 4 445 124 B1**
(45) Veröffentlichungstag und Bekanntmachung des Hinweises auf die Patenterteilung: **25.02.2026**
(21) Anmeldenummer: 22823604.8
(22) Anmeldetag: 06.12.2022
(51) Int. Cl.: G01N 27/04

(54) **VORRICHTUNG ZUM ERMITTELN EINER LEITFÄHIGKEIT EINES REIFENS**
DEVICE FOR DETERMINING A CONDUCTIVITY OF A TYRE
DISPOSITIF DE DÉTERMINATION D'UNE CONDUCTIVITÉ D'UN PNEU

(30) Priorität: 07.12.2021 DE 102021213871
(43) Veröffentlichungstag der Anmeldung: 16.10.2024
(73) Patentinhaber: ZF Friedrichshafen AG, 88046 Friedrichshafen (DE)
(72) Erfinder: ZILLNER, Franz, 94107 Untergriesbach (DE); GRIEBL, Andreas, 94542 Haarbach (DE); GELL, Maximilian, 94130 Obernzell (DE)
(74) Vertreter: ZF Friedrichshafen AG
(86) Internationale Anmeldenummer: PCT/EP2022/084624
(87) Internationale Veröffentlichungsnummer: WO 2023/104810

(56) Entgegenhaltungen:
- EP-B1- 1 250 998
- WO-A1-2020/109995
- CN-A- 104 142 211
- DE-B4- 112013 000 568
- DE-T5- 112016 006 032
- JP-A- 2020 169 847

## Beschreibung

Die vorliegende Erfindung betrifft eine Vorrichtung zum Ermitteln einer Leitfähigkeit eines Reifens.

Vorrichtungen zum Ermitteln einer Leitfähigkeit eines Reifens sind aus dem Stand der Technik bekannt. Beispielsweise kann die Leitfähigkeit eines Reifens zwischen einem Wulst des Reifens und einer Lauffläche des Reifens ermittelt werden. Hierbei wird beispielsweise ein elektrisch leitfähiger Abschnitt an den Wulst angelegt und ein weiterer elektrisch leitfähige Abschnitt an die Lauffläche angelegt. Eine Vorrichtung zum Ermitteln der Leitfähigkeit eines Reifens ist im Dokument DE11 2016 006032 T5 offenbart.

Generell ist es wünschenswert, die Vorrichtungen zum Ermitteln einer Leitfähigkeit eines Reifens einfach und materialsparend zu konstruieren.

Es ist daher eine Aufgabe der vorliegenden Erfindung eine einfach und materialsparend aufgebaute Vorrichtung zum Ermitteln einer Leitfähigkeit eines Reifens bereitzustellen.

Die genannte Aufgabe wird durch eine Vorrichtung mit den Merkmalen des Patentanspruchs 1 gelöst. Die Vorrichtung ist zum Ermitteln einer Leitfähigkeit eines Reifens angepasst. Die Vorrichtung weist einen Rahmen auf. Außerdem weist die Vorrichtung eine an dem Rahmen angebrachte Auflageeinrichtung auf. Die Auflageeinrichtung weist eine sich in einer Auflageebene erstreckende Auflagefläche auf. Auf der Auflagefläche kann ein Reifen aufliegen. Die Vorrichtung weist außerdem eine erste Messeinrichtung auf. Die erste Messeinrichtung ist an dem Rahmen angebracht. Die erste Messeinrichtung weist einen elektrisch leitfähigen ersten Abschnitt auf. Die Vorrichtung weist außerdem eine zweite Messeinrichtung auf. Die zweite Messeinrichtung ist an dem Rahmen angebracht. Die zweite Messeinrichtung weist einen elektrisch leitfähigen zweiten Abschnitt auf. Die Vorrichtung ist so angepasst, dass dann, wenn ein Reifen, der eine radial außen verlaufende Lauffläche und einen radial innen verlaufenden Wulst aufweist, mit einer der Auflageebene zugewandten ersten Seite auf der Auflagefläche aufliegt, die erste Messeinrichtung so von einer der ersten Seite des Reifens gegenüberliegenden zweiten Seite des Reifens zu dem Wulst verfahren werden kann, dass in einer Prüfkonfiguration der erste Abschnitt und der Wulst in Kontakt sind und der zweite Abschnitt und die Lauffläche in Kontakt sind.

Die Vorrichtung ist zum Ermitteln der Leitfähigkeit eines Reifens angepasst. Bevorzugt wird die Leitfähigkeit des Reifens ermittelt, in dem eine elektrische Spannung an den Reifen angelegt wird und eine elektrische Stromstärke erfasst wird und aus diesen beiden größten die elektrische Leitfähigkeit berechnet wird. Bevorzugt weist die Vorrichtung eine Erfassungseinheit zum Erfassen sowohl der elektrischen Spannung als auch der elektrischen Stromstärke auf. Außerdem weist die Vorrichtung bevorzugt eine Recheneinheit auf, die aus den erfassten Werten die Leitfähigkeit berechnet. Im Zusammenhang mit der vorliegenden Erfindung ist der Begriff Leitfähigkeit so zu verstehen, dass damit insbesondere die elektrische Leitfähigkeit gemeint ist. Außerdem ist im Zusammenhang mit der vorliegenden Erfindung der Begriff Leitfähigkeit so zu verstehen, dass unter dem Begriff auch ein elektrischer Widerstand zu verstehen ist und die vorliegende Erfindung analog auch auf die Ermittlung eines elektrischen Widerstands eines Reifens bezogen werden kann. Die Vorrichtung ist ausgelegt die Leitfähigkeit insbesondere von solchen Reifen zu ermitteln, die eine radial außen verlaufende Lauffläche und einen radial innen verlaufenden Wulst aufweisen. Insbesondere kann der Reifen zwei parallel zueinander und radial innen verlaufende Wulste aufweisen. Im Zusammenhang mit der vorliegenden Erfindung sind die Beschreibungen für einen Wulst entsprechend auch für jeden Wulst anwendbar, wenn der Reifen zwei Wulste aufweist.

Die Vorrichtung weist den Rahmen auf. Der Rahmen kann einen ersten Abschnitt aufweisen, mit dem der Rahmen auf einer Bodenfläche aufliegt. Außerdem kann der Rahmen einen zweiten Abschnitt aufweisen, an dem die Komponenten der Vorrichtung angebracht sind, wie beispielsweise die Auflageeinrichtung, die erste Messeinrichtung und die zweite Messeinrichtung. Jede Komponente der Vorrichtung kann beispielsweise direkt oder indirekt an dem Rahmen angebracht sein. Außerdem kann jede Komponente der Vorrichtung beispielsweise gegenüber dem Rahmen beweglich oder nicht beweglich an dem Rahmen angebracht sein.

Außerdem weist die Vorrichtung die an dem Rahmen angebrachte Auflageeinrichtung auf. Bevorzugt weist die Auflageeinrichtung einen Abschnitt auf, der direkt an dem Rahmen angebracht ist und gegenüber dem Rahmen nicht beweglich ist.

Die Auflageeinrichtung weist die sich in der Auflageebene erstreckende Auflagefläche auf. Die Auflagefläche erstreckt sich in der Auflageebene. Da sich die Auflagefläche in der Auflageebene erstreckt, weist die Auflagefläche zumindest einen Abschnitt auf, der eine ebenen Flächenabschnitt für den Reifen bereitstellt, sodass der Reifen insbesondere auch relativ zu der Bodenfläche parallel zu dieser angeordnet sein kann.

Auf der Auflagefläche kann der Reifen aufliegen. Insbesondere ist der Reifen kein Bestandteil der Vorrichtung. Die Auflagefläche ist jedoch insbesondere dafür vorgesehen, dass Reifen, bei denen die elektrische Leitfähigkeit geprüft werden soll, auf der Auflagefläche aufliegen können, insbesondere räumlich und/oder zeitlich nacheinander. Wenn der Reifen auf der Auflagefläche aufliegt, dann ist eine erste Seite des Reifens der Auflageebene zugewandt. Eine zweite Seite des Reifens liegt der ersten Seite des Reifens gegenüber und weist von der Auflageebene weg, bevorzugt in eine Richtung entgegen der Wirkung der Schwerkraft.

Die Vorrichtung weist außerdem die erste Messeinrichtung auf. Die erste Messeinrichtung ist an dem Rahmen angebracht. Die erste Messeinrichtung ist bevorzugt indirekt an dem Rahmen angebracht. Insbesondere ist die erste Messeinrichtung bevorzugt an einem Ende eines Roboterarms angebracht, der sich von dem ersten Ende zu einem zweiten Ende erstreckt, an dem der Roboterarm an dem Rahmen angebracht ist. Insbesondere ist die erste Messeinrichtung gegenüber dem Rahmen beweglich an dem Rahmen angebracht. Bevorzugt kann der Roboterarm eine bewegliche und indirekte Anbringung der ersten Messeinrichtung an dem Rahmen bereitstellen.

Die erste Messeinrichtung weist den elektrisch leitfähigen ersten Abschnitt auf. Die erste Messeinrichtung weist zumindest den elektrisch leitfähigen ersten Abschnitt auf. Die erste Messeinrichtung kann auch mehr als einen elektrisch leitfähigen ersten Abschnitt aufweisen. Für den Fall, dass die erste Messeinrichtung mehr als einen elektrisch leitfähigen ersten Abschnitt aufweist, sind die ersten Abschnitte bevorzugt räumlich voneinander getrennt. Bevorzugt ist der mindestens eine elektrisch leitfähige erste Abschnitt ausgebildet mit einem Abschnitt des Wulstes des Reifens in Kontakt zu stehen, sodass zwischen dem ersten Abschnitt und dem Abschnitt des Wulstes ein elektrisch leitfähiger Kontakt hergestellt ist. Für den Fall, dass mehrere elektrisch leitfähige erste Abschnitte vorgesehen sind, ist bevorzugt für jeden elektrisch leitfähigen ersten Abschnitt ein entsprechender Abschnitt des Wulstes vorgesehen, sodass zwischen jedem elektrisch leitfähigen ersten Abschnitt und dem dazugehörigen entsprechenden Abschnitt des Wulstes ein elektrisch leitfähiger Kontakt hergestellt ist. Insbesondere kann für den Fall, dass mehrere elektrisch leitfähige erste Abschnitte vorgesehen sind, die erste Messeinrichtung angepasst sein, dass zu einem vorgegebenen Zeitpunkt oder während eines vorgegebenen Zeitintervalls lediglich ein elektrisch leitfähiger erster Abschnitt zusammen mit der zweiten Messeinrichtung daran beteiligt ist, die elektrische Spannung an dem Reifen bereitzustellen. Ebenso ist bevorzugt für den Fall, dass mehrere elektrisch leitfähige erste Abschnitte vorgesehen sind, die erste Messeinrichtung angepasst, dass zu einem vorgegebenen Zeitpunkt oder während eines vorgegebenen Zeitintervalls lediglich ein elektrisch leitfähiger erste Abschnitt zusammen mit der zweiten Messeinrichtung daran beteiligt ist, die aufgrund der elektrischen Spannung vorliegende elektrischen Stromstärke zu erfassen.

Die Vorrichtung weist außerdem die zweite Messeinrichtung auf. Die zweite Messeinrichtung ist an dem Rahmen angebracht. Die zweite Messeinrichtung ist bevorzugt direkt an dem Rahmen angebracht. Insbesondere ist die zweite Messeinrichtung bevorzugt gegenüber dem Rahmen nicht beweglich an dem Rahmen angebracht. Die Vorrichtung weist mindestens eine zweite Messeinrichtung auf. Die Vorrichtung kann auch mehr als eine zweite Messeinrichtung aufweisen. Für den Fall, dass die Vorrichtung mehr als eine zweite Messeinrichtung aufweist, sind die zweiten Messeinrichtungen bevorzugt so angeordnet, dass sie voneinander beanstandet sind. Beispielsweise kann die Vorrichtung zwei zweite Messeinrichtungen aufweisen, die auf zwei gegenüberliegenden Seiten der Auflagefläche angeordnet sind. Besonders bevorzugt sind zwei zweite Messeinrichtungen senkrecht zu einer Transportrichtung angeordnet, entlang der der Reifen parallel zur Auflageebene bewegt wird. Außerdem sind die zwei zweite Messeinrichtungen so angeordnet, dass sie sich von der Auflageebene weg und in Richtung der zweiten Seite des Reifens, insbesondere senkrecht zu der Auflageebene, erstrecken.

Die zweite Messeinrichtung weist den elektrisch leitfähigen zweiten Abschnitt auf. Die zweite Messeinrichtung und insbesondere jede zweite Messeinrichtung kann auch mehr als einen elektrisch leitfähigen zweiten Abschnitt aufweisen. Für den Fall, dass die zweite Messeinrichtung mehr als einen elektrisch leitfähigen zweiten Abschnitt aufweist, sind die zweiten Abschnitte bevorzugt räumlich voneinander getrennt angeordnet. Bevorzugt ist der mindestens eine elektrisch leitfähige zweite Abschnitt ausgebildet mit einem Abschnitt der Lauffläche des Reifens in Kontakt zu stehen, sodass zwischen dem zweiten Abschnitt und dem Abschnitt der Lauffläche ein elektrisch leitfähiger Kontakt hergestellt ist. Für den Fall, dass mehrere elektrisch leitfähige zweite Abschnitte vorgesehen sind, ist bevorzugt für jeden elektrisch leitfähigen zweiten Abschnitt ein entsprechender Abschnitt der Lauffläche vorgesehen, sodass zwischen jedem elektrisch leitfähigen zweiten Abschnitt und der dem dazugehörigen entsprechenden Abschnitt der Lauffläche ein elektrisch leitfähiger Kontakt hergestellt ist. Insbesondere ist vorgesehen, dass für den Fall, dass mehrere elektrisch leitfähige zweite Abschnitte vorgesehen sind, die zweite Messeinrichtung angepasst ist, dass zu einem vorgegebenen Zeitpunkt oder während eines vorgegebenen Zeitintervalls lediglich ein elektrisch leitfähiger zweiter Abschnitt zusammen mit der ersten Messeinrichtung daran beteiligt ist, die elektrische Spannung an dem Reifen bereitzustellen. Ebenso ist bevorzugt für den Fall, dass mehrere elektrisch leitfähige zweite Abschnitte vorgesehen sind, die zweite Messeinrichtung so angepasst, dass zu einem vorgegebenen Zeitpunkt oder während eines vorgegebenen Zeitintervalls lediglich ein elektrisch leitfähiger zweiter Abschnitt zusammen mit der ersten Messeinrichtung daran beteiligt ist, die aufgrund der elektrischen Spannung vorliegende elektrischen Stromstärke zu erfassen.

Die Vorrichtung ist so angepasst, dass dann, wenn ein Reifen, der eine radial außen verlaufende Lauffläche und einen radial innen verlaufenden Wulst aufweist, mit einer der Auflageebene zugewandten ersten Seite auf der Auflagefläche aufliegt, die erste Messeinrichtung so von einer der ersten Seite des Reifens gegenüberliegenden zweiten Seite des Reifens zu dem Wulst verfahren werden kann, dass in einer Prüfkonfiguration der erste Abschnitt und der Wulst in Kontakt sind und der zweite Abschnitt und die Lauffläche in Kontakt sind. Die erste Messeinrichtung kann von der zweiten Seite des Reifens zu dem Wulst verfahren werden und so ein Kontakt zwischen dem ersten Abschnitt und dem Wulst hergestellt werden, sodass auf weitere Komponenten der ersten Messeinrichtung auf der zweiten Seite des Reifens verzichtet werden kann. Aufgrund des Verzichts weitere Komponenten der Messeinrichtung auf der zweiten Seite des Reifens kann die Vorrichtung materialsparend und einfach aufgebaut sein. Insbesondere ist vorgesehen, dass zur Erreichung der Prüfkonfiguration, in der der erste Abschnitt und der Wulst in Kontakt sind und der zweite Abschnitt und die Lauffläche in Kontakt sind, und insbesondere zum Herstellen dieser Kontakte keine zusätzlichen Komponenten der Vorrichtung auf der ersten Seite des Reifens vorgesehen werden müssen. Bevorzugt ist vorgesehen, dass die Vorrichtung neben der ersten Messeinrichtung keine weiteren relativ zu dem Rahmen bewegbare Komponenten mit Ausnahme der Auflageeinrichtung für die Bewegung des Reifens aufweist. Insbesondere ist vorgesehen, dass die Vorrichtung lediglich eine erste Messeinrichtung aufweist. Insgesamt weist die Vorrichtung somit einen einfachen Aufbau auf. Insbesondere können auch einfach installierbare Vorrichtungen zur Bereitstellung der Auflagefläche verwendet werden und es müssen keine weiteren Strukturen zur Bereitstellung der Auflagefläche und Kontaktierung des Reifens von der ersten Seite des Reifens aus vorgesehen sein.

Besonders bevorzugt sind dann, wenn die erste Messeinrichtung von der zweiten Seite des Reifens zu dem Wulst verfahren wird, der zweite Abschnitt und die Lauffläche nicht in Kontakt. In diesem Fall kann der erste Abschnitt und der Wulst, und insbesondere weitere erste Abschnitte und der Wulst, zunächst in Kontakt gebracht werden, sodass zwischen dem ersten Abschnitt und einem entsprechenden Abschnitt des Wulstes bzw. zwischen jedem ersten Abschnitt und einem entsprechenden Abschnitt des Wulstes jeweils ein Kraftschluss hergestellt wird, sodass aufgrund dieses Kraftschluss der Reifen in Richtung seiner zweiten Seite mithilfe der ersten Messeinrichtung verfahren werden kann. Außerdem kann zusätzlich oder alternativ in diesem Fall der erste Abschnitt und der Wulst, und insbesondere weitere erste Abschnitte und der Wulst, zunächst in Kontakt gebracht werden, sodass zwischen dem ersten Abschnitt und einem entsprechenden Abschnitt des Wulstes bzw. zwischen jedem ersten Abschnitt und einem entsprechenden Abschnitt des Wulstes jeweils ein Formschluss hergestellt wird, sodass aufgrund dieses Formschlusses der Reifen in Richtung seiner zweiten Seite mithilfe der ersten Messeinrichtung verfahren werden kann. Insbesondere ist vorgesehen, dass zwischen dem ersten Abschnitt und einem entsprechenden Abschnitt des Wulstes ein Formschluss hergestellt wird, sodass durch Bewegung der ersten Messeinrichtung hinzu der zweiten Messeinrichtung der Kontakt zwischen dem zweiten Abschnitt und der Lauffläche hergestellt werden kann. Durch den Kraftschluss bzw. den Formschluss zwischen dem Reifen und der ersten Messeinrichtung kann die erste Messeinrichtung zusätzlich dazu, dass mit ihrer Hilfe die elektrische Leitfähigkeit des Reifens gemessen werden kann, der Reifen bewegt werden. Insbesondere kann die erste Messeinrichtung dazu verwendet werden, den Reifen in Richtung der zweiten Seite des Reifens und von der Auflagefläche weg zu bewegen. Alternativ oder zusätzlich kann die erste Messeinrichtung dazu verwendet werden, den Reifen in Richtung zu der zweiten Messeinrichtung hin zu bewegen.

Alternativ bevorzugt kann dann, wenn die erste Messeinrichtung von der zweiten Seite des Reifens zu dem Wulst verfahren wird, der zweite Abschnitt und die Lauffläche in Kontakt sein. In diesem Fall kann die Prüfkonfiguration durch Verfahren der ersten Messeinrichtung von der zweiten Seite des Reifens zu dem Wulst erreicht werden. Ein anschließendes Bewegen des Reifens hinzu der zweiten Messeinrichtung ist in diesem Fall nicht notwendig, sodass mithilfe der Vorrichtung besonders Zeit effizient die elektrische Leitfähigkeit des Reifens gemessen werden kann.

Zusammenfassend kann also festgestellt werden, dass eine einfach und materialsparend aufgebaute Vorrichtung zum Ermitteln einer Leitfähigkeit eines Reifens bereitgestellt wird.

In einer Ausführungsform weist die erste Messeinrichtung eine Vielzahl von Armen auf, die in Richtung zu der Auflageebene hin, von der Auflageebene weg und relativ zueinander, insbesondere parallel zur Auflageebene, verfahrbar sind. Insbesondere ist jeder Arm der Vielzahl von Armen relativ zum Rahmen verfahrbar. Jeder Arm der Vielzahl von Armen ist insbesondere relativ zu den übrigen armen der Vielzahl von Armen verfahrbar. Insbesondere ist jeder Arm relativ zu den übrigen Armen in Richtung zu der Auflageebene hin, von der Auflageebene weg und parallel zur Auflageebene verfahrbar. Insbesondere kann für jeden Arm zwischen einem Abschnitt des Armes und eines entsprechenden Abschnitts des Wulstes ein Kontakt hergestellt werden, sodass ein Kraftschluss und/oder ein Formschluss zwischen der ersten Messeinrichtung und dem Reifen hergestellt werden kann, insbesondere zwischen den Armen der ersten Messeinrichtung und dem Wulst des Reifens hergestellt werden kann. Insbesondere kann der Kontakt zwischen der ersten Messeinrichtung und dem Reifen so hergestellt werden, dass der Reifen in Richtung seiner zweiten Seite von der Auflage Ebene weg verfahren werden kann. Weiter kann der Kontakt zwischen der ersten Messeinrichtung und dem Reifen so hergestellt sein, dass der Reifen hin zu der zweiten Messeinrichtung verfahren werden kann, sodass ein Abschnitt der Lauffläche des Reifens mit dem zweiten Abschnitt der zweiten Messeinrichtung in Kontakt gebracht werden kann. Insbesondere ist mithilfe der Vielzahl der Arme gewährleistet, dass ein Reifen exakt positioniert werden kann, insbesondere dann, wenn der Reifen auf der Auflagefläche aufliegt und/oder dann, wenn der Reifen mit seiner Lauffläche mit der zweiten Messeinrichtung in Kontakt ist. Außerdem kann der Reifen nach der Leitfähigkeitsmessung erneut auf der Auflagefläche angeordnet werden und ebenfalls erneut zentriert bzw. exakt positioniert werden, sodass der Reifen für folgende Verfahrensschritte und die dafür vorgesehenen weiteren Vorrichtungen eine optimale Position einnimmt. Insbesondere kann das Positionieren und das Ermitteln der Leitfähigkeit mit einem vergleichsweise einfachen Aufbau gewährleistet werden. Insbesondere kann mit der Vielzahl von Armen eine Zentrierung bzw. exakte Positionierung des Reifens durchgeführt werden, insbesondere dann, wenn der Reifen auf der Auflagefläche aufliegt, sodass eine exakte Positionierung des Reifens relativ zu den Armen gewährleistet ist. Diese exakte Positionierung gewährleistet ebenfalls, dass der Reifen gegenüber der zweiten Messeinrichtung exakt positioniert werden kann. Insbesondere kann der Reifen gegenüber dem elektrisch leitfähigen zweiten Abschnitt der zweiten Messeinrichtung exakt positioniert werden, was die Zuverlässigkeit der Leitfähigkeitsmessung erhöht.

In einer Ausführungsform bildet der elektrisch leitfähige erste Abschnitt einen Abschnitt eines Armes der Vielzahl von Armen. Wenn der elektrisch leitfähige erste Abschnitt einen Abschnitt eines Armes der Vielzahl von Armen bildet, kann mithilfe der ersten Messeinrichtung sowohl die Leitfähigkeitsmessung an dem Reifen durchgeführt werden als auch ein Verfahren des Reifens mithilfe der ersten Messeinrichtung gewährleistet werden.

In einer Ausführungsform weist jeder Arm der Vielzahl von Armen einen elektrisch leitfähigen ersten Abschnitt auf. Wenn jeder Arm der Vielzahl von Armen einen elektrisch leitfähigen Abschnitt aufweist, so kann der Wulst des Reifens an unterschiedlichen, insbesondere räumlich voneinander getrennten, Abschnitten mithilfe des elektrisch leitfähigen ersten Abschnitts kontaktiert werden. Insbesondere kann an unterschiedlichen Abschnitten des Reifens die Leitfähigkeit des Reifens ermittelt werden. Bevorzugt kann während aufeinander folgender Zeitabschnitte in jedem Zeitabschnitt ein anderer Abschnitt des Reifens mit einer elektrischen Spannung versehen werden, sodass jeweils eine elektrische Spannung an einem Abschnitt des Reifens anliegt und eine an diesem Abschnitt des Reifens vorliegende elektrische Stromstärke erfasst werden kann und daraus die Leitfähigkeit dieses Reifenabschnitts berechnet werden kann. Hierdurch kann die Leitfähigkeit des Reifens an den unterschiedlichen Abschnitten des Reifens ermittelt werden und es kann ein Leitfähigkeitsprofil, insbesondere entlang der Umlaufrichtung des Reifens, ermittelt werden. Insbesondere dann, wenn lediglich eine zweite Messeinrichtung vorgesehen ist, kann dies geschehen, in dem der Reifen zur Messung von jedem Abschnitt um seine Rotationsachse verschwenkt wird. Für den Fall, dass mehrere zweite Messeinrichtungen vorgesehen sind, kann der Reifen zur Messung von jedem Abschnitt so bewegt werden, dass er nicht um seine Rotationsachse verschwenkt wird, sondern ohne Rotation zu den zweiten Messeinrichtungen bewegt wird.

In einer Ausführungsform weist die Vorrichtung für jeden Arm der Vielzahl von Armen eine zweite Messeinrichtung auf, die einen elektrisch leitfähigen zweiten Abschnitt aufweist. Insbesondere dann, wenn jeder Arm der Vielzahl von Armen einen elektrisch leitfähigen ersten Abschnitt aufweist und für jeden Arm der Vielzahl von Armen eine zweite Messeinrichtung mit einem elektrisch leitfähigen zweiten Abschnitt vorgesehen ist, kann die Leitfähigkeit mehrerer Abschnitte des Reifens ermittelt werden, indem der Reifen nacheinander an die zweiten Messeinrichtungen verfahren wird, insbesondere ohne um seine Rotationsachse verschwenkt werden, und die sich gegenüberliegenden und zur Leitfähigkeitsmessung entsprechend vorgesehenen ersten und zweiten Abschnitte nacheinander mit einer elektrischen Spannung versehen werden und eine dort vorliegende elektrische Stromstärke erfasst wird. Auf diese Weise können die unterschiedlichen Abschnitte des Reifens besonders zeiteffizient ermittelt werden.

In einer Ausführungsform weist die Vielzahl von Armen vier Arme auf. Mithilfe von vier Armen kann der Reifen besonders präzise ausgerichtet werden, sodass der Reifen relativ zu den vier Armen besonders präzise positioniert ist und der Reifen somit auch besonders präzise gegenüber der zweiten Messeinrichtung positioniert werden kann, sodass insbesondere zuverlässig vergleichbare Leitfähigkeitsmessungen durchgeführt werden können. Insbesondere gewährleisten die vier Arme, dass die Ergebnisse der Leitfähigkeitsmessungen nicht durch eine Fehlposition des Reifens verfälscht werden.

In einer Ausführungsform ist die Auflagefläche relativ zum Rahmen bewegbar. Wenn ein Reifen auf der Auflagefläche aufliegt, so kann diese relativ zum Rahmen bewegt werden. Der Reifen kann also auf einfache und zeiteffiziente Weise in eine Position verbracht werden, in der die erste Messeinrichtung mit dem Reifen eingreifen kann. Der Bewegungsraum der ersten Messeinrichtung kann dadurch geringgehalten werden.

In einer Ausführungsform weist die Vorrichtung ferner einen Riemen und zwei drehbar gelagerte Umlenkrollen auf, die von dem Riemen teilweise umschlungen sind, sodass der Riemen zwischen den Umlenkrollen einen ebenen Riemenabschnitt bildet, der sich entlang der Auflageebene erstreckt und die Auflagefläche aufweist. Die Verwendung eines Riemen gewährleistet, dass der Riemenabschnitt auf eine die Messung der Leitfähigkeit abgestimmte Größe dimensioniert werden kann.

In einer Ausführungsform weist die Vorrichtung ferner mindestens eine Förderrolle auf, wobei die Auflagefläche durch einen Abschnitt einer Außenfläche der mindestens einen Förderrolle gebildet ist. Die Verwendung von Förderkosten stellt eine besonders wartungsarme Alternative bereit.

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen weiterhin gleiche Bezugszeichen für gleiche oder ähnliche Objekte.
- Figuren 1a) bis 1d): zeigen eine schematische Darstellung einer Draufsicht einer Ausführungsform einer erfindungsgemäßen Vorrichtung.
- Figur 2: zeigt eine schematische Darstellung einer Seitenansicht der Ausführungsform der Vorrichtung in den Figuren 1a) bis 1d).
- Figuren 3 und 4: zeigen jeweils eine schematische Darstellung einer Vorderansicht der Ausführungsform der Vorrichtung in den Figuren 1a) bis 1d) und 2.

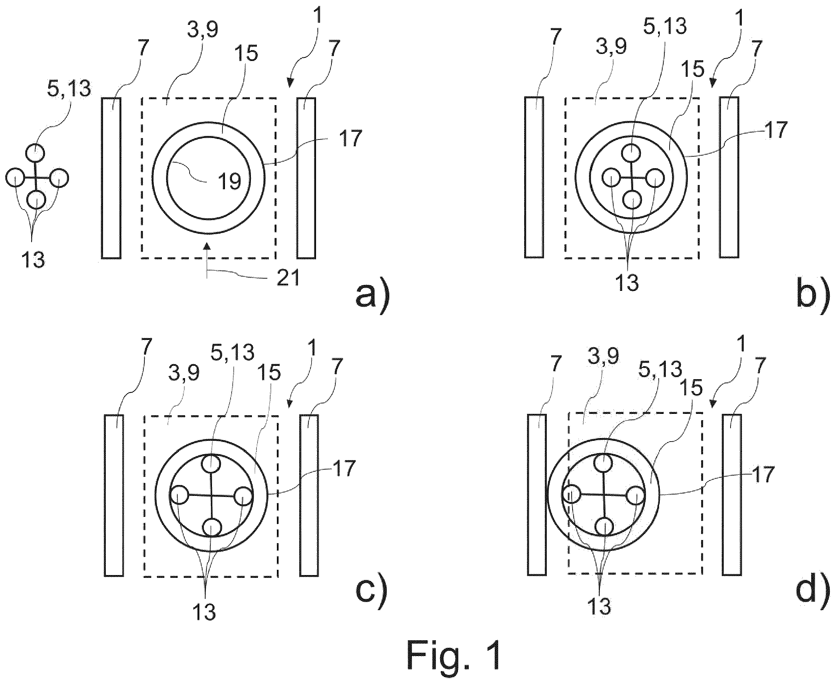

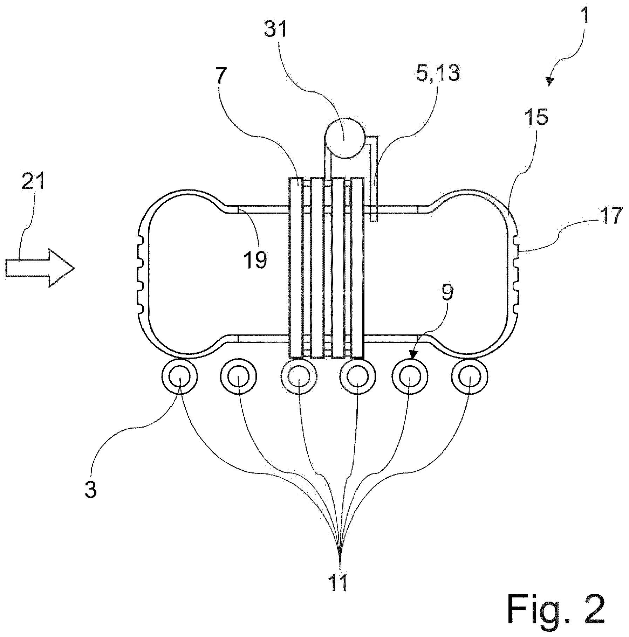

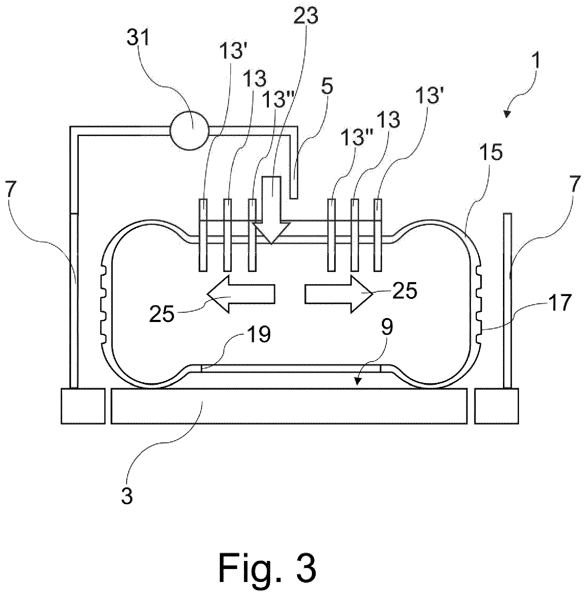

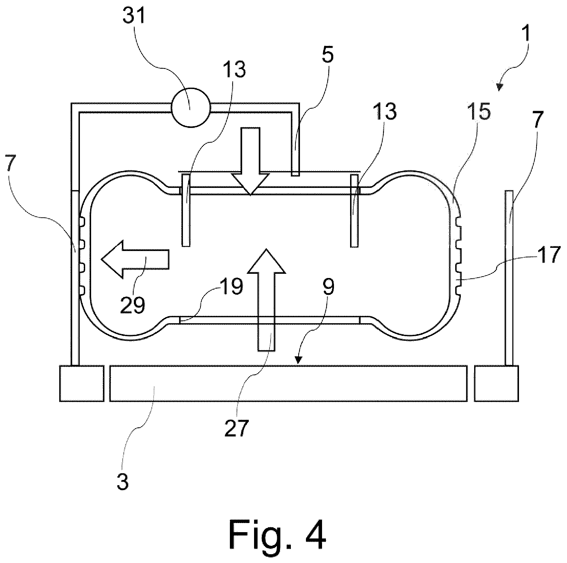

Figuren 1a) bis 1d), 2, 3 und 4 zeigen eine Ausführungsform einer erfindungsgemäßen Vorrichtung 1. Die Figuren 1a) bis 1d) zeigen eine schematische Darstellung einer Draufsicht der Ausführungsform der Vorrichtung 1, Figur 2 zeigt eine schematische Darstellung einer Seitenansicht der Ausführungsform der Vorrichtung 1 und die Figuren 3 und 4 zeigen eine schematische Darstellung einer Vorderansicht der Ausführungsform der Vorrichtung 1.

Die Vorrichtung 1 weist einen in den Figuren nicht dargestellten Rahmen auf. Die einzelnen Komponenten der Vorrichtung 1 sind direkt oder indirekt und gegenüber dem Rahmen beweglich oder nicht beweglich an dem Rahmen angebracht. Die Vorrichtung 1 weist eine Auflageeinrichtung 3, eine erste Messeinrichtung 5, zwei zweite Messeinrichtung 7 auf. Die Auflageeinrichtung 3, die erste Messeinrichtung 5 die zweite Messeinrichtung 7 sind an dem Rahmen angebracht. Die Auflageeinrichtung 3 weist eine Auflagefläche 9 auf, die sich in einer Auflageebene erstreckt. Die Figuren 1a) bis 1d) entsprechen einer senkrechten Draufsicht auf die Auflagefläche 9 und die Blickrichtung ist senkrecht auf die Auflageebene gerichtet. Die Figuren 2 bis 4 entsprechen einer Blickrichtung parallel zu der Erstreckung der Auflagefläche 9 und die Auflageebene erstreckt sich parallel zu der Blickrichtung. Die Auflagefläche 9 ist relativ zum Rahmen bewegbar. Wie in der Figur 2 zu sehen ist, weist die Vorrichtung 1 eine Vielzahl von Förderrollen 11 auf, die um eine entsprechende Drehachse drehbar an dem Rahmen befestigt sind. Jede Förderrolle 11 der Förderrollen 11 weist eine Außenfläche auf, die sich um die Drehachse drehen kann, sodass zu jedem Zeitpunkt ein Abschnitt der Außenfläche in der Figur 2 nach oben weist. Die Abschnitte der Außenflächen, die in der Figur 2 nach oben weisen, bilden die Auflagefläche 9. Als Alternative zu den Förderkosten 11, kann die Vorrichtung 1 einen Riemen und zwei drehbargelagerte Umlenkrollen aufweisen. Die Umlenkrollen sind von dem Riemen teilweise umschlungen, sodass der Riemen zwischen den Umlenkrollen einen ebenen Riemenabschnitt bildet, der sich entlang der Auflageebene erstreckt und die Auflagefläche 9 bildet oder diese aufweist.

Die erste Messeinrichtung 5 weist vier Arme 13 auf. Jeder Arm 13 der vier Arme 13 ist relativ zum Rahmen verfahrbar. Insbesondere ist die erste Messeinrichtung 5 relativ zum Rahmen verfahrbar. Die erste Messeinrichtung 5 ist in Richtung zu der Auflageebene hin, von der Auflageebene weg und parallel zu der Auflageebene verfahrbar. Jeder Arm 13 ist relativ zu den übrigen Armen 13 verfahrbar. D. h. die Arme 13 sind relativ zueinander verfahrbar. Jeder Arm 13 relativ zu den übrigen Armen 13 in Richtung zu der Auflageebene hin, von der Auflageebene weg und parallel zur Auflageebene verfahrbar. Die Vorrichtung 1 weist zwei zweite Messeinrichtungen 7 auf. Jede zweite Messeinrichtung 7 ist für einen entsprechenden Arm 13 vorgesehen, sodass für zwei Arme 13 jeweils eine zweite Messeinrichtung 7 vorgesehen ist. Die hier dargestellte Vorrichtung 1 weist vier Arme 13 auf. Erfindungsgemäß ist jedoch alternativ auch eine Vorrichtung 1 vorgesehen, die zwei Arme 13 aufweist. In diesem Fall kann die Vorrichtung 1 ebenfalls zwei zweite Messeinrichtungen 7 aufweisen, sodass für jeden Arm 13 eine zweite Messeinrichtung 7 vorgesehen ist.

Jeder Arm 13 der vier Arme 13 weist einen elektrisch leitfähigen ersten Abschnitt auf. Die Messeinrichtung 5 weist also vier elektrisch leitfähige erste Abschnitte auf. In einem alternativen Beispiel kann die erste Messeinrichtung 5 auch lediglich einen elektrisch leitfähigen ersten Abschnitt aufweisen. Beispielsweise können vier Arme 13 vorgesehen sein, wobei lediglich ein Arm 13 der vier Arme 13 einen elektrisch leitfähigen ersten Abschnitt aufweist. In analoger Weise kann die erste Messeinrichtung 5 zwei elektrisch leitfähige erste Abschnitte oder drei elektrisch leitfähige erste Abschnitte aufweisen, wobei dann, wenn vier Arme 13 vorgesehen sind, lediglich zwei Arme 13 oder drei Arme 13 jeweils einen elektrisch leitfähigen ersten Abschnitt aufweisen. Alternativ ist es auch möglich, dass eine bestimmte Anzahl von Armen 13, wie beispielsweise vier Arme 13, vorgesehen sind, und die erste Messeinrichtung 5 einen elektrisch leitfähigen ersten Abschnitt aufweist, der keinen Abschnitt eines Armes 13 der Vielzahl von Armen 13 bildet. Beispielsweise kann die erste Messeinrichtung 5 ein Element aufweisen, das den elektrisch leitfähigen ersten Abschnitt aufweist und angepasst ist, in Richtung zu der Auflageebene hin, von der Auflageebene weg und/oder parallel zu der Auflageebene verfahren zu werden.

Jede der zwei zweiten Messeinrichtungen 7 weist einen elektrisch leitfähigen zweiten Abschnitt auf. In einem alternativen Ausführungsbeispiel kann die Vorrichtung 1 auch lediglich eine Messeinrichtung 7 aufweisen, die einen elektrisch leitfähigen zweiten Abschnitt aufweist. In diesem Fall wird von der Vorrichtung 1 lediglich ein elektrisch leitfähiger zweite Abschnitt bereitgestellt.

Mithilfe der vier elektrisch leitfähigen ersten Abschnitte und der zwei elektrisch leitfähigen zweiten Abschnitte kann die Vorrichtung 1 die elektrische Leitfähigkeit eines Reifens 15 ermitteln. Der Reifen 15 weist eine radial außen verlaufende Lauffläche 17 und einen radial innen verlaufenden Wulst 19 auf. Der Reifen 15 liegt auf der Auflagefläche 9 auf. Hierbei liegt der Reifen 15 mit einer der Auflageebene zugewandten ersten Seite auf der Auflagefläche auf, wobei eine zweite Seite des Reifens 15, die der ersten Seite des Reifens 15 gegenüberliegt, von der Auflagefläche weg und in eine Richtung entgegen der Schwerkraftswirkung weist. In den Figuren 2,3 und 4 weist die erste Seite des Reifens 15 nach unten und die zweite Seite des Reifens 15 weist nach oben. In einer Prüfkonfiguration ist jeder elektrisch leitfähige erste Abschnitt der vier elektrisch leitfähigen ersten Abschnitte und ein entsprechender Abschnitt des Wulstes 19 in Kontakt. Außerdem ist in der Prüfkonfiguration der elektrisch leitfähige zweite Abschnitt der in den Figuren 3 und 4 links dargestellten zweiten Messeinrichtung 7 und die Lauffläche 17 in Kontakt. Die Prüfkonfiguration ist in der Figur 1d) und in der Figur 4 dargestellt.

Um die elektrische Leitfähigkeit des Reifens 15 zu ermitteln, wird der Reifen auf die Auflagefläche 9 positioniert und in eine Transportrichtung 21 durch relative Bewegung der Auflagefläche 9 gegenüber dem Rahmen befördert. Diese Beförderung findet bis zu der in Figur 1 a) dargestellten Position statt. Als nächstes wird die erste Messeinrichtung 5 auf die zweite Seite des Reifens 15 so verfahren, dass der Reifen 15 zwischen der ersten Messeinrichtung 5 und der Auflagefläche 9 positioniert ist. Die vier Arme 13 werden so relativ zueinander positioniert, dass eine Projektion der vier Arme 13 auf die Auflageebene innerhalb einer Projektion des Reifens 15 auf die Auflageebene angeordnet ist, die vier Arme 13 in dieser relativen Position zueinander also so in die Richtung der Auflagefläche 9 bewegt werden können, dass sie radial innen relativ zu dem Wulst 19 angeordnet werden können. In der Figur 1b) ist diese Position der ersten Messeinrichtung 5 und insbesondere der vier Arme 13 dargestellt.

Als nächstes werden die vier Arme 13 in Richtung der Auflagefläche 9 bewegt. Die erste Meseinheit 5 wird also von der zweiten Seite des Reifens 15 zu dem Reifen 15 hin verfahren. Diese Bewegung ist in der Figur 3 als erste Bewegungsrichtung 23 dargestellt. Wenn die vier Arme 13 zumindest mit jeweils einem Abschnitt radial innen relativ zu dem Wulst 19 angeordnet sind, wie dies in der Figur 3 dargestellt ist, werden die vier Arme 13 relativ zueinander und parallel zu der Auflageebene voneinander wegbewegt, sodass sie an dem Wulst 19 anliegen. Insbesondere können die vier Arme 13 so gegen den Wulst 19 gefahren werden, dass zwischen den vier Armen 13 und dem Wulst 19 ein Kraftschluss gebildet wird, sodass bei einem Bewegen der vier Arme 13 in Richtung von der Auflageebene weg und in Richtung der zweiten Seite des Reifens 15 der Reifen 15 zusammen mit den vier Armen 13 in Richtung der zweiten Seite des Reifens 15 verfahren wird. Die Position der vier Arme 13 relativ zu dem Wulst 19 in der die vier Arme 13 und der Wulst 19 in Kontakt sind, ist in der Figur 1c) dargestellt. Die Bewegung der vier Arme 13 relativ zueinander und in Richtung des Wulstes 19 ist durch eine zweite Bewegungsrichtung 25 in der Figur 3 dargestellt. Ebenfalls sind in Figur 3 unterschiedliche Positionen der zwei Arme 13 dargestellt, die in Figur 3 dargestellt sind. Die zwei Arme 13 können von den Positionen, in denen sie in der Figur 3 dargestellt sind, jeweils in eine entsprechende zweite Bewegungsrichtung 25 parallel zur Auflageebene verfahren werden. Die Positionen, in denen jeder Arm 13 der zwei Arme 13 mit dem Wulst 19 in Kontakt ist, ist mit dem Bezugszeichen 13' gekennzeichnet und kann auch als entsprechende erste Position 13' des entsprechenden Armes 13 bezeichnet werden. Die Positionen, in denen jeder Arm 13 der zwei Arme 13 angeordnet ist, nachdem die Arme 13 in Richtung der Auflageebene verfahren wurden, sodass jeder Arm 13 der vier Arme 13 zumindest mit jeweils einem Abschnitt radial innen relativ zu dem Wulst 19 angeordnet sind, ist mit dem Bezugszeichen 13" gekennzeichnet und kann auch als entsprechende zweite Position 13" des entsprechenden Armes 13 bezeichnet werden. In der Figur 1b) ist jeder Arm 13 in der zweiten Position 13".

Als nächstes wird der Reifen 15 zusammen mit den vier Armen 13 in Richtung der zweiten Seite des Reifens 15 bewegt. Das Bewegen des Reifens 15 zusammen mit den vier Armen 13 in Richtung der zweiten Seite des Reifens 15 ist in der Figur 4 durch eine dritte Bewegungsrichtung 27 schematisch dargestellt. Es liegt also zunächst eine Position der vier Arme 13 und des Reifens 15 vor, in der die vier Arme 13 und der Reifen 15 bereits von der Auflagefläche 9 in Richtung der ersten Seite des Reifens 15 beabstandet positioniert sind, die Lauffläche 17 des Reifens 15 jedoch noch nicht mit dem elektrisch leitfähigen zweiten Abschnitt der zweiten Messeinrichtung 7 in Kontakt ist. Diese Anordnung ist ebenfalls durch die Draufsicht in Figur 1 c) beschrieben.

Als nächstes wird die erste Messeinrichtung 5 und insbesondere werden die vier Arme 13 parallel zu der Auflageebene bewegt. In der Figur 1d) ist eine Position der vier Arme 13 nach einer Bewegung nach links in der Figur 1d) dargestellt. Die vier Arme 13 werden so lange parallel zu der Auflageebene bewegt, bis die Lauffläche 17 mit dem elektrisch leitfähigen zweiten Abschnitt der in der Figur 1d) links dargestellten zweiten Messeinrichtung 7 in Kontakt ist. Diese Bewegung ist in der Figur 4 durch eine vierte Bewegungsrichtung 29 dargestellt. In der in der Figur 1d) und in der in Figur 4 dargestellten Position ist die Prüfkonfiguration dargestellt, in der die vier elektrisch leitfähigen ersten Abschnitte der vier Arme 13 jeweils mit einem Abschnitt des Wulstes 19 in Kontakt sind und die Lauffläche 17 mit einem Abschnitt mit dem elektrisch leitfähigen zweiten Abschnitt der in den Figuren 1d) und 4 links dargestellten zweiten Messeinrichtung 7 in Kontakt ist.

Die Vorrichtung 1 ist also angepasst, die erste Messeinrichtung 5 so von der zweiten Seite des Reifens 15 zu dem Wulst 19 zu verfahren, dass in der Prüfkonfiguration sowohl die vier ersten Abschnitte und der Wulst 19 als auch der zweite Abschnitt und die Lauffläche 17 in Kontakt sind.

Die Vorrichtung 1 weist eine dritte Messeinrichtung 31 auf, die sowohl mit der ersten Messeinrichtung 5 als auch mit jeder zweiten Messeinrichtung 7 verbunden ist. Die dritte Messeinrichtung 29 ist angepasst, mithilfe der ersten Messeinrichtung 5 und der in Figur 4 links dargestellten zweiten Messeinrichtung 7 eine elektrische Spannung zwischen einer Oberfläche des Wulstes 19, die mit einem ersten Abschnitt der ersten Messeinrichtung 5 in Kontakt ist, und einer Oberfläche der Lauffläche 17 bereitstellen, die mit dem zweiten Abschnitt der in Figur 4 links dargestellten zweiten Messeinrichtung 7 in Kontakt ist. Außerdem ist die dritte Messeinrichtung 31 angepasst, eine elektrische Stromstärke zu erfassen, die aufgrund der an dem Reifen 15 angelegten elektrischen Spannung hervorgerufen wird. Die angelegte elektrische Spannung, die ebenfalls zur Kontrolle zusätzlich erfasst werden kann, und die erfasste elektrische Stromstärke können dann für die Berechnung der elektrischen Leitfähigkeit des Reifens 15 herangezogen werden. Diese Berechnung kann von einer Recheneinheit der Vorrichtung 1 durchgeführt werden. Im Zusammenhang mit der vorliegenden Erfindung ist der Begriff Leitfähigkeit so zu verstehen, dass damit insbesondere die elektrische Leitfähigkeit gemeint ist. Außerdem ist im Zusammenhang mit der vorliegenden Erfindung der Begriff Leitfähigkeit so zu verstehen, dass unter dem Begriff auch ein elektrischer Widerstand zu verstehen sein kann und die vorliegende Erfindung analog auch auf die Ermittlung eines elektrischen Widerstands eines Reifens bezogen werden kann.

Die erfindungsgemäße Vorrichtung 1 gewährleistet, dass der Reifen 15 zunächst zentriert bzw. exakt positioniert werden kann, insbesondere dann, wenn der Reifen 15 auf der Auflagefläche 9 aufliegt, und anschließend eine Leitfähigkeitsmessung durchgeführt werden kann. Außerdem kann der Reifen 15 nach der Leitfähigkeitsmessung erneut auf der Auflagefläche 9 angeordnet werden und ebenfalls erneut zentriert bzw. exakt positioniert werden, sodass der Reifen 15 für folgende Verfahrensschritte und die dafür vorgesehenen weiteren Vorrichtungen eine optimale Position einnimmt. Insbesondere kann das Positionieren und das Ermitteln der Leitfähigkeit mit einem vergleichsweise einfachen Aufbau gewährleistet werden. Die zunächst durchgeführte Zentrierung, bei der der Reifen 15 noch auf der Auflagefläche 9 aufliegt, gewährleistet, dass der Reifen 15 relativ zu den Armen 13 exakt positioniert werden kann, was ebenfalls eine exakte Positionierung des Reifens gegenüber der zweiten Messeinrichtung 7 und insbesondere gegenüber dem elektrisch leitfähigen zweiten Abschnitt der zweiten Messeinrichtung 7 gewährleistet. Ebenfalls vorteilhaft ist, dass die erste Messeinrichtung 5 von der zweiten Seite des Reifens 15, d. h. in den Figuren 23 und 4 jeweils von oben, in den Reifen 15 eingreifen kann, da hierdurch gewährleistet werden kann, dass einfach installierbare Vorrichtungen zur Bereitstellung der Auflagefläche 9 verwendet werden können und keine weiteren Strukturen an der Vorrichtung 1 vorgesehen sein müssen.

Ergänzend sei darauf hingewiesen, dass "aufweisend" keine anderen Elemente oder Schritte ausschließt und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

### Bezugszeichen

- 1: Vorrichtung
- 3: Auflageeinrichtung
- 5: erste Messeinrichtung
- 7: zweite Messeinrichtung
- 9: Auflagefläche
- 11: Förderrolle
- 13: Arm
- 13': erste Position eines Armes
- 13": zweite Position eines Armes
- 15: Reifen
- 17: Lauffläche
- 19: Wulst
- 21: Transportrichtung
- 23: erste Bewegungsrichtung
- 25: zweite Bewegungsrichtung
- 27: dritte Bewegungsrichtung
- 29: vierte Bewegungsrichtung
- 31: dritte Messeinrichtung

## Patentansprüche

1. Vorrichtung (1) zum Ermitteln einer Leitfähigkeit eines Reifens (15), wobei die Vorrichtung (1) folgendes aufweist:
einen Rahmen,
eine an dem Rahmen angebrachte Auflageeinrichtung (3) mit einer sich in einer Auflageebene erstreckenden Auflagefläche (9), auf der ein Reifen (15) aufliegen kann,
eine an dem Rahmen angebrachte erste Messeinrichtung (5), die einen elektrisch leitfähigen ersten Abschnitt aufweist, und
eine an dem Rahmen angebrachte zweite Messeinrichtung (7), die einen elektrisch leitfähigen zweiten Abschnitt aufweist,
**dadurch gekennzeichnet, dass**
die Vorrichtung (1) so angepasst ist, dass dann, wenn ein Reifen (15), der eine radial außen verlaufende Lauffläche (17) und einen radial innen verlaufenden Wulst (19) aufweist, mit einer der Auflageebene zugewandten ersten Seite auf der Auflagefläche (9) aufliegt, die erste Messeinrichtung (5) so von einer der ersten Seite des Reifens (15) gegenüberliegenden zweiten Seite des Reifens (15) zu dem Wulst (19) verfahren (23) werden kann, dass in einer Prüfkonfiguration der erste Abschnitt und der Wulst (19) in Kontakt sind und der zweite Abschnitt und die Lauffläche (17) in Kontakt sind.

2. Vorrichtung (1) nach Anspruch 1, wobei die erste Messeinrichtung (5) eine Vielzahl von Armen (13) aufweist, die in Richtung zu der Auflageebene hin, von der Auflageebene weg und relativ zueinander, insbesondere parallel zur Auflageebene, verfahrbar sind.

3. Vorrichtung (1) nach Anspruch 2, wobei der elektrisch leitfähige erste Abschnitt einen Abschnitt eines Armes (13) der Vielzahl von Armen (13) bildet.

4. Vorrichtung (1) nach einem der Ansprüche 2 bis 3, wobei jeder Arm (13) der Vielzahl von Armen (13) einen elektrisch leitfähigen ersten Abschnitt aufweist.

5. Vorrichtung (1) nach Anspruch 4, wobei die Vorrichtung (1) für jeden Arm (13) der Vielzahl von Armen (13) eine zweite Messeinrichtung (7) aufweist, die einen elektrisch leitfähigen zweiten Abschnitt aufweist.

6. Vorrichtung (1) nach einem der Ansprüche 2 bis 5, wobei die Vielzahl von Armen (13) vier Arme (13) aufweist.

7. Vorrichtung (1) nach einem der vorhergehenden Ansprüche, wobei die Auflagefläche (9) relativ zum Rahmen bewegbar ist.

8. Vorrichtung (1) nach Anspruch 7, die ferner einen Riemen und zwei drehbar gelagerte Umlenkrollen aufweist, die von dem Riemen teilweise umschlungen sind, sodass der Riemen zwischen den Umlenkrollen einen ebenen Riemenabschnitt bildet, der sich entlang der Auflageebene erstreckt und die Auflagefläche (9) aufweist.

9. Vorrichtung (1) nach Anspruch 7, die ferner mindestens eine Förderrolle aufweist, wobei die Auflagefläche (9) durch einen Abschnitt einer Außenfläche der mindestens einen Förderrolle gebildet ist.

## Claims

1. Apparatus (1) for determining a conductivity of a tyre (15), wherein the apparatus (1) has the following:
a frame,
a support device (3), which is attached to the frame and has a support surface (9) which extends in a support plane and on which a tyre (15) can rest,
a first measuring device (5), which is attached to the frame and has an electrically conductive first portion, and
a second measuring device (7), which is attached to the frame and has an electrically conductive second portion,
**characterized in that**
the apparatus (1) is adapted such that, when a tyre (15), which has a radially outer tread (17) and a radially inner bead (19), rests on the support surface (9) by way of a first side which faces the support plane, the first measuring device (5) can be moved (23) from a second side of the tyre (15), which is situated opposite the first side of the tyre (15), to the bead (19) such that, in a test configuration, the first portion and the bead (19) are in contact and the second portion and the tread (17) are in contact.

2. Apparatus (1) according to Claim 1, wherein the first measuring device (5) has a plurality of arms (13) which can be moved in the direction of the support plane, away from the support plane and relative to each other, in particular parallel to the support plane.

3. Apparatus (1) according to Claim 2, wherein the electrically conductive first portion forms a portion of an arm (13) of the plurality of arms (13).

4. Apparatus (1) according to either of Claims 2 and 3, wherein each arm (13) of the plurality of arms (13) has an electrically conductive first portion.

5. Apparatus (1) according to Claim 4, wherein the apparatus (1) has a second measuring device (7), which has an electrically conductive second portion, for each arm (13) of the plurality of arms (13).

6. Apparatus (1) according to any of Claims 2 to 5, wherein the plurality of arms (13) has four arms (13).

7. Apparatus (1) according to any of the preceding claims, wherein the support surface (9) can be moved relative to the frame.

8. Apparatus (1) according to Claim 7, which further has a belt and two rotatably mounted deflection rollers around which the belt is partially wrapped, so that the belt forms a flat belt portion, which extends along the support plane and has the support surface (9), between the deflection rollers.

9. Apparatus (1) according to Claim 7, which further has at least one conveyor roller, wherein the support surface (9) is formed by a portion of an outer surface of the at least one conveyor roller.

## Revendications

1. Dispositif (1) destiné à déterminer une conductivité d'un pneu (15), le dispositif (1) présentant les éléments suivants :
un cadre,
un dispositif de support (3) monté sur le cadre et possédant une surface de support (9) qui s'étend dans un plan de support et sur lequel peut reposer un pneu (15), un premier dispositif de mesure (5) monté sur le cadre et comportant une première partie électriquement conductrice, et
un deuxième dispositif de mesure (7) monté sur le cadre et comportant une deuxième partie électriquement conductrice,
**caractérisé en ce que**
le dispositif (1) est conçu de telle sorte que si un pneu (15), qui possède une surface de bande de roulement (17) s'étendant radialement vers l'extérieur et un talon (19) s'étendant radialement vers l'intérieur, repose sur la surface de support (9) par un premier côté faisant face au plan de support, le premier dispositif de mesure (5) peut être déplacé (23) depuis un deuxième côté du pneu (15) qui est opposé au premier côté du pneu (15) vers le talon (19), de sorte que, dans une configuration de test, la première partie et le talon (19) sont en contact et la deuxième partie et la surface de bande de roulement (17) sont en contact.

2. Dispositif (1) selon la revendication 1, dans lequel le premier dispositif de mesure (5) comporte une pluralité de bras (13) qui sont mobiles dans la direction du plan de support, à l'écart du plan de support et les uns par rapport aux autres, en particulier parallèlement au plan de support.

3. Dispositif (1) selon la revendication 2, dans lequel la première partie électriquement conductrice forme une partie d'un bras (13) de la pluralité de bras (13).

4. Dispositif (1) selon l'une quelconque des revendications 2 à 3, dans lequel chaque bras (13) de la pluralité de bras (13) comporte une première partie électriquement conductrice.

5. Dispositif (1) selon la revendication 4, dans lequel le dispositif (1) comporte, pour chaque bras (13) de la pluralité de bras (13), un deuxième dispositif de mesure (7) qui possède une deuxième partie électriquement conductrice.

6. Dispositif (1) selon l'une quelconque des revendications 2 à 5, dans lequel la pluralité de bras (13) comporte quatre bras (13).

7. Dispositif (1) selon l'une quelconque des revendications précédentes, dans lequel la surface de support (9) est mobile par rapport au cadre.

8. Dispositif (1) selon la revendication 7, comprenant en outre une courroie et deux rouleaux de renvoi montés rotatifs, qui sont partiellement enlacés par la courroie, de sorte que la courroie forme entre les rouleaux de renvoi une partie de courroie plate, qui s'étend le long du plan de support et de la surface de support (9).

9. Dispositif (1) selon la revendication 7, comprenant en outre au moins un rouleau transporteur, la surface de support (9) étant formée par une partie d'une surface extérieure dudit au moins un rouleau transporteur.
